(19) **Europäisches Patentamt**

**European Patent Office**

**Office européen des brevets**

(11) **EP 0 610 402 B1**

(12) **EUROPEAN PATENT SPECIFICATION**

(45) Date of publication and mention
of the grant of the patent:
**19.04.2000 Bulletin 2000/16**

(51) Int. Cl.[7]: **B32B 15/08**, B32B 27/06,
B32B 27/08, F16C 27/06,
B32B 3/18, F16F 1/36

(21) Application number: **92923500.0**

(22) Date of filing: **22.10.1992**

(86) International application number:
**PCT/US92/09176**

(87) International publication number:
**WO 93/08023 (29.04.1993 Gazette 1993/11)**

(54) **IMPROVED DAMPING IN COMPOSITE STRUCTURES THROUGH STRESS COUPLING**

VERBUNDSTRUKTUR MIT VERBESSERTER DÄMPFUNG DURCH SPANNUNGSKUPPLUNG

STRUCTURES COMPOSITES A AMORTISSEMENT AMELIORE PAR COUPLAGE DE
CONTRAINTES

(84) Designated Contracting States:
**DE FR GB**

(30) Priority: **22.10.1991 US 780923**

(43) Date of publication of application:
**17.08.1994 Bulletin 1994/33**

(73) Proprietor:
**BRIGHAM YOUNG UNIVERSITY
Provo, Utah 84602 (US)**

(72) Inventors:
• **OLCOTT, Dennis, D.
Kirkland, WA 98034 (US)**
• **ROTZ, Christopher
Orem, UT 84058 (US)**

(74) Representative:
**Quinterno, Giuseppe et al
c/o JACOBACCI & PERANI S.p.A.
Corso Regio Parco, 27
10152 Torino (IT)**

(56) References cited:
**EP-A- 0 133 340        EP-A- 0 437 045
US-A- 4 278 726        US-A- 4 940 617
US-A- 4 946 721        US-A- 5 087 491
US-A- 5 335 463**

• **NTIS TECH NOTES, 1 September 1991
SPRINGFIELD, VA, US., page 718 XP 000264118
'COMPOSITE STRUTS WOULD DAMP
VIBRATIONS'**

Remarks:
The file contains technical information submitted
after the application was filed and not included in
this specification

## Description

This invention relates to composite structures. It is particularly directed to multiple layer composite structures, and provides a multi segment construction with significantly improved damping properties.

The control of vibrations in composite structures is an important area of research in aerospace, automotive and other industries. For example, spacecraft vibrations initiated by attitude adjusting thrusters, motors and thermally induced stresses inhibit accurate aiming of antennas and other equipment carried by the craft. Such vibrations can cause severe damage to the craft and its associated equipment. Fatigue failure of structural components can occur at stresses well below static load limits.

Composite materials have been used to construct a wide variety of structural elements, including tubes, enclosures, beams, plates and irregular shapes. Objects as diverse as rocket motor housings and sporting goods, notably skis, archery arrows, vaulting poles and tennis rackets have been structured from composite materials. While composite constructions have offered many significant advantages, such as excellent strength and stiffness properties, together with light weight, the poor vibration damping properties of such constructions have been of concern. The article "Understanding Vibration Measurements," George F. Lang, Sound and Vibration, March, 1976, p. 26, presents a generally accepted mathematical treatment of the vibration of mechanical structures under environmental loading. This treatment applies generally to composite structures, and is incorporated by reference for purposes of this disclosure for its explanation of the amplification factor Q and its relationship to the viscous damping factor $\xi$. The "loss ratio" referred to in this disclosure is twice the viscous damping factor as defined by Lang.

A technique known as "constrained layer damping" has been relied upon to add damping properties to existing structures. According to this technique, damping material, typically a viscoelastic material, is applied to the surface of a composite structure, such as an airplane wing. The damping material is sandwiched between the composite surface and a rigid layer, such as a thin aluminum sheet. This approach has generally been remedial in character and is accomplished at the sacrifice of other considerations, such as weight, aesthetics and ideal surface configuration. It is known that laminated beams composed of alternating layers of elastic and viscoelastic materials can dissipate vibratory energy while maintaining a degree of structural integrity. The article "Composite Damping of Vibrating Sandwich Beams," DiTaranto, et al, Jour. of Engineering for Industry, Nov., 1967, p. 633, presents a theoretical description of such structures.

The feasibility of co-curing embedded layers of damping materials in a composite structure has been demonstrated. Vibration control can thus be designed into a structure prior to its actual construction. Composite tubes have been constructed from a pair of concentric composite stiffness layers, the annular space between them being occupied by a damping layer. It is known that when fiber-reinforced materials are loaded along any axis not parallel or perpendicular to the fibers, shear deformations are induced. A tube with plies oriented "off-axis" (with respect to the central axis of the tube) will rotate when loaded axially. With the plies of the two stiffness layers oriented at opposite but similar angles with respect to the tube axis, intense shear deformation is induced in the damping layer when the tube is loaded axially. The stiffness of the tube remains high because the load passes only through the stiffness layers, and the damping layer adds little weight to the structure. Unfortunately, the most significant shear displacements occur at the free ends of the tube. Constraining the rotational deformations of the stiffness plies at either end of the tube eliminates any shear deformations in the damping layer at that end, thereby reducing the damping effect of the system. Complicated end fixtures are thus required to allow the requisite free end displacements while still transmitting axial loads.

The use of composite struts to dampen vibrations has been proposed by NASA Tech Brief Vol. 15, No. 4, Item #87, April 1991. According to that proposal, plies with opposing chevron patterns of fibers would convert longitudinal vibrational stresses into shear stresses in an intermediate viscoelastic layer which would then dissipate the vibrational energy. One specific structure proposed is a tube with an inner ply oriented at 0°, a second layer oriented at 45°, a central viscoelastic layer (with or without fiber reinforcement), a subsequent layer oriented at minus 45° and an outer layer oriented at 90 degrees. This publication describes the conventional viscoelastic tubular constraining dampers of the prior art and postulates that the proposed composite strut would provide damping factors of ten to 30 percent.

The materials, methods and applications of composites manufacturing are set forth in detail in the literature. An exemplary source for information of this kind is the textbook "FUNDAMENTALS OF COMPOSITES MANUFACTURING" by A. Brent Strong, published by The Society of Manufacturing Engineers, Dearborn, Michigan, 1989. Similarly, the textbook "VISCOELASTIC PROPERTIES OF POLYMERS," John D. Ferry, Wiley, New York, (3rd Ed., 1980) presents a thorough summary of the nature, behavior and identity of typical materials which may be selected by composites technicians for use as damping materials. A good discussion of viscoelasticity as it applies to materials of interest to this disclosure is presented in the publication "Linear Viscoelasticity," Driscoll, et al., available from the Structural Products Department of 3M Company, St. Paul, Minnesota.

Other references of interest are : NTIS Tech. Notes, 01.09.1991, page 718, Springfield, Va., U.S.A. "Composite Struts would damp Vibrations"; EP-A-0 133 340; US-A-5 335 463; and EP-A-0 437 045.

There remains a need for a composite structure capable of diverse configuration with improved damping characteristics and which avoids the limitations of the structural approaches heretofore suggested for use with composites materials.

This need is met according to the invention by a composite structure as defined in annexed Claims 1, 4, 8 and 14.

According to this invention, a composite multilayer structure is formed in segments. Adjacent segments have the plies of their respective stiffness layers disposed at different off-axis orientations. Multiple high shear regions are thus created at the boundaries between segments remote from the ends of the structure. Accordingly, the ends of the structure may be restrained without significantly reducing the overall damping properties of the structure. There results a structural element possessing high axial stiffness and low weight. The structural elements of this invention offer markedly superior damping capabilities but are nevertheless useable with simple attachment fixtures and methods. The designer may apply the teachings of this disclosure to applications as diverse as plates, tubes, beams, sports equipment, drive shafts, and high precision aiming and focusing equipment

The composite structures of this invention may take a variety of forms, including tubes, plates, beams or other regular or irregular shapes. In any event, a typical structure will at a minimum include a first stiffness layer, an intermediate damping layer, and a second stiffness layer. Each stiffness layer will include at least one ply of reinforcing fibers and will be at least several thousandths of an inch thick. Layers with multiple plies and of much greater thickness; e.g. several inches, are within contemplation. The individual plies of a layer may be of similar or dissimilar orientation. The intermediate damping layer may be of any appropriate thickness, depending upon the application involved, as well as the properties of the damping material selected. Typically, the damping layer will be as thin as is practical, to avoid adding excess weight to the structure. It is not unusual, however for the damping layer to exceed in thickness the total thickness of the stiffness layers. The stiffness layers may be constructed of any of the reinforcing fiber and resinous materials which would otherwise be appropriate for a particular application. The damping material will ordinarily be selected to provide optimum damping loss at the temperatures and vibrational frequencies expected to be encountered by the composite structure.

With two stiffness layers, shearing is imposed upon a single intermediate damping layer. Other embodiments contemplate the use of multiple damping layers. For example, the use of three stiffness layers permits the exercise of two intermediate damping layers, with greater damping effect. The stiffness layer may be combined with the damping layer by utilizing a viscoelastic material as all or a portion of the impregnating resin. Co-curing of the stiffness and damping layers simplifies the construction of both complex structures and structural components.

In the drawings, which illustrate that which is regarded as the best mode for carrying out the invention:

FIG. 1 is an exploded pictorial view of a typical generalized embodiment of this invention;
FIG. 2 is a pictorial view of a specific embodiment of this invention;
FIG. 3 is a fragmentary pictorial generalized view of certain alternative embodiments of this invention;
FIG. 4 is a pictorial view of an alternative class of embodiments of this invention;
FIG. 5 is a pictorial view of a preferred structure of this invention;
FIG. 6 is a plan view, partially in perspective of a structural component of certain embodiments of this invention; and
FIGS. 7-10 are plots of data obtained from parametric studies of certain tube structures of this invention.

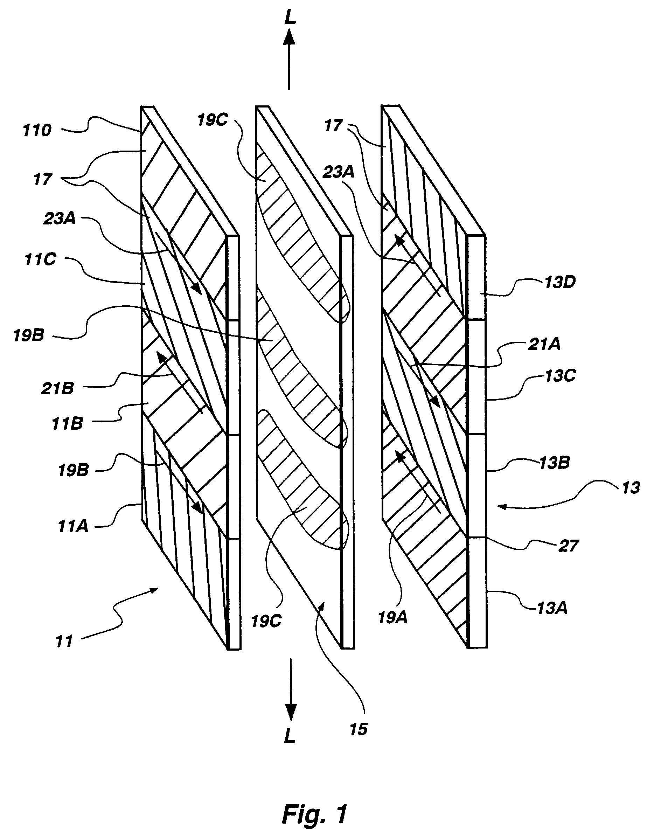

FIG. 1 illustrates a simple embodiment of the composite construction of this invention in which a first stiffness layer 11 and a second stiffness layer 13 sandwich an intermediate viscoelastic layer 15. Although structures utilizing a single stiffness layer are practical, they are not ordinarily preferred. The layers are shown exploded for purposes of illustration, but they should be understood to represent layers of a unitary structure which has been laid up by hand or machine and then co-cured. As shown, the first layer 11 is provided in segments 11 A,B,C and D, respectively. The second stiffness layer 13 is similarly provided in corresponding segments A,B,C, and D, respectively. Fiber ply orientation angles are indicated by lines 17 which represent reinforcement fibers in the stiffness layers 11, 13. The orientation angles are dissimilar in adjacent segments; e.g. 11C and 11D, as well as in corresponding opposite segments; e.g. 11D and 13D. With a load applied in the direction indicated by the arrows L, displacements are induced as indicated by the arrows 19A,B; 21A,B; 23A,B. The transverse displacements associated with the layer 11 are opposite in direction from the corresponding transverse displacements associated with the layer 13. As a consequence, regions 19C, 21C, 23C of high shear occur in the viscoelastic layer 15 in the vicinity of the boundaries, e.g. 27, between adjacent segments; e.g. 13A, 13B. It should be understood that this structural approach is generally applicable to structures formed of composite materials utilizing any material capable of functioning as a damping material.

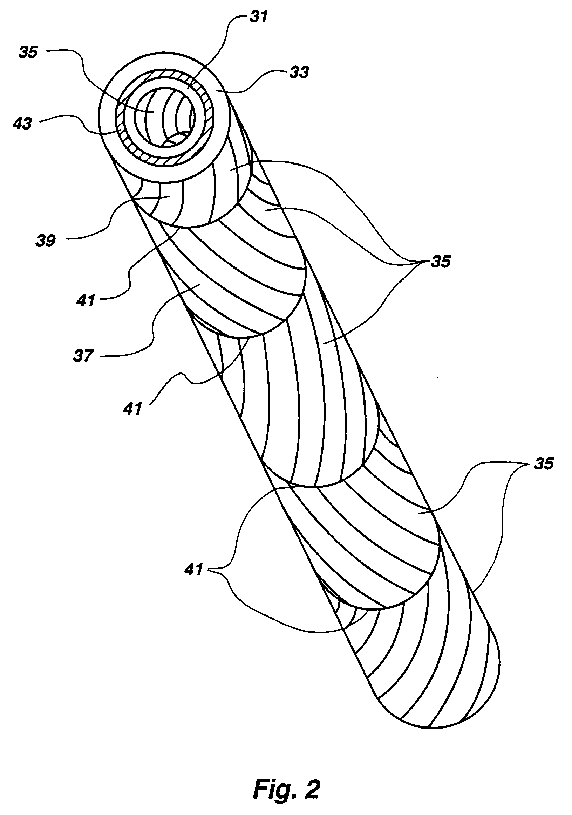

The fundamental structure illustrated by FIG. 1 may be configured variously, such as the tube illustrated by FIG. 2. As there illustrated, multiple composite layers 31, 33 are provided in segments with alternation winding (orientation) angles. That is, the fibers of ply 37 may be regarded as having a positive winding angle and the fibers of ply 39 may be regarded as having a negative winding angle. Regions of high shear thus occur at the boundaries between segments. This shear energy is dissipated as heat by the intermediate damping layer 43 which may be constructed of one or more layers of viscoelastic material.

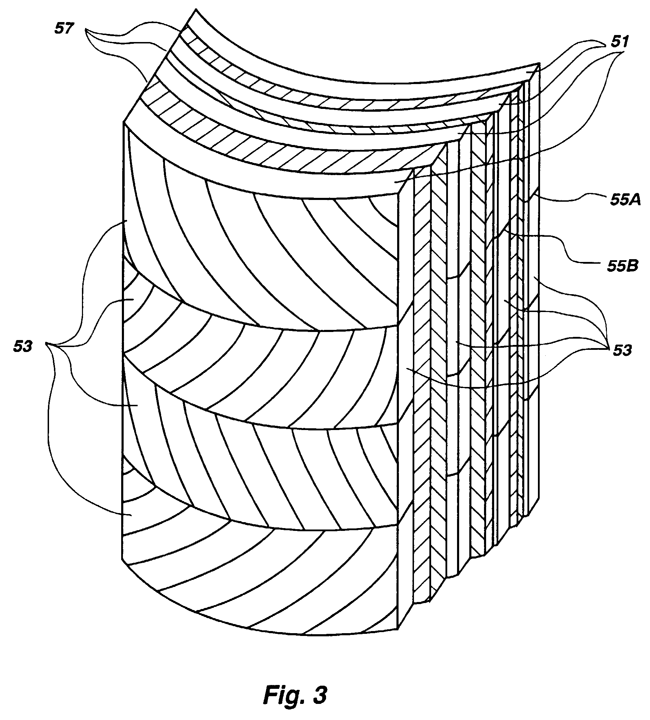

FIG. 3 illustrates the variability of structural detail envisioned by this invention, whether embodied as a curved segment, as illustrated, or otherwise. In any event, any convenient number of stiffness layers 51 of composite materials (which may vary among layers as to thickness, specific material selection and number and orientation of plies of reinforcing fibers) may be included. Each layer 51 will include multiple segments 53 which will abut to form boundaries 55. It is generally preferred that the sign of the orientation angle be alternated in adjacent segments of the same stiffness layer. It is similarly generally preferred that the sign of the orientation angle be alternated in directly opposite segments of parallel stiffness layers.

As illustrated, the boundaries; e.g. 55A, 55B, will be directly opposite another such boundary. Other boundary structures are within contemplation, however. The segments 53 may be of varying segment length and may be characterized by varying winding angles. A lack of uniformity in this respect may be preferred in some instances, particularly if it is desired to broaden the useful application environment of a structural member constructed in accordance with this invention.

A plurality of damping layers 57, of either uniform or varying composition and dimensions, may be included. Typically, a damping layer 57 will be disposed between each pair of stiffness layers 51.

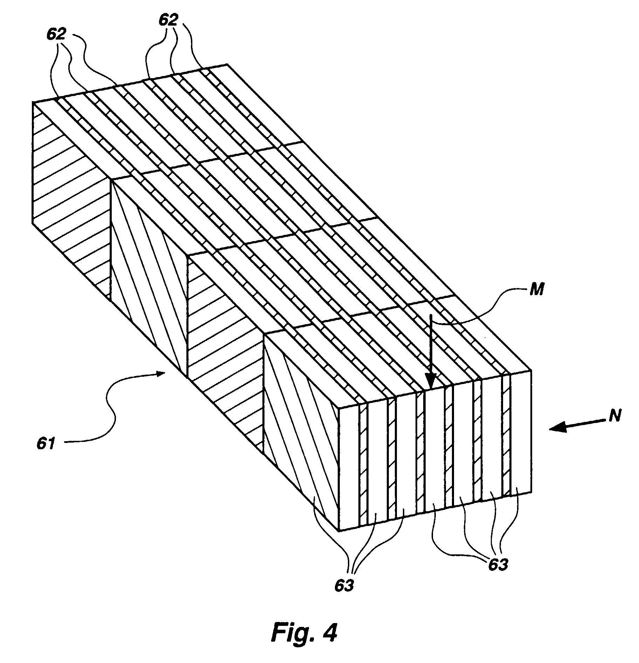

FIG. 4 illustrates the structure illustrated generally by FIG. 1 configured as a beam 61 comprised of a plurality of stiffness layers 63 and damping layers 65, all generally in accordance with the variable design parameters discussed in connection with FIG. 3. Beams 61 constructed in this fashion may be loaded as indicated by the arrows M and N as desired for a specific application. Axial, torsional and combined loading are all possible and within contemplation.

The structures illustrated and otherwise embodied within the teachings of this disclosure exhibit increased damping as compared to similar structures of composite materials. It has been found that varying (such as by alternating the sign of the winding angle) the orientation angle of fibers in adjacent segments along the length of a fiber reinforced composite member induces shear strains at the segment boundaries through the stress-coupling properties inherent in composite materials. Sandwiching a layer of viscoelastic material between two such composite members and then loading the resulting structure results in inducing shear stresses and strains across the viscoelastic material. The hysteresis losses in the viscoelastic layer induce damping of the entire structure. Shearing is substantially increased at the boundaries. The number of these high shear regions is increased by utilizing a greater number of segments. A designer is thereby offered a significant variable.

From a design standpoint, increasing the number of segments results in a modest loss in axial stiffness but a very significant gain in the loss factor. The loss factor increases approximately linearly as the number of segments increases. Similarly, increasing the magnitude of the off axis orientation angle results in a somewhat greater reduction in axial stiffness but a much more meaningful increase in the loss factor. Because the loss factor is determined on a per cycle basis, even a small mathematical increase in this factor corresponds to a commercially significant advance in the art. The loss factor for typical composite structures is less than one percent. Loss factors in excess of five percent are achievable by embodiments of this invention which include two stiffness layers of four segments each and a single damping layer. Loss factors in excess of 25 percent are deemed to be achievable with more complex structural arrangements.

**EXAMPLE I**

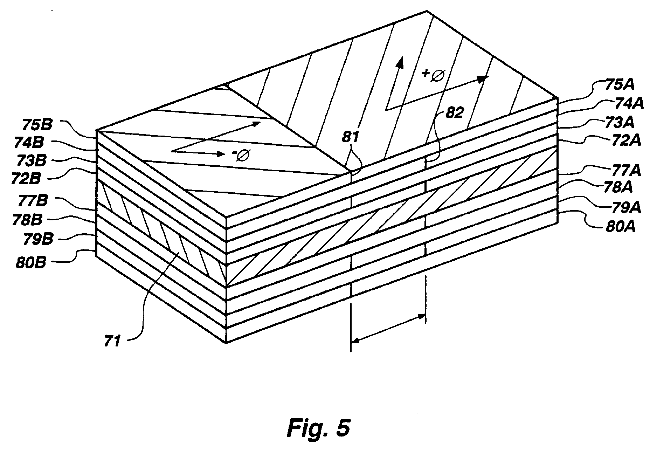

Several tubes were constructed from FIBERITE 6048 GRAPHITE/EPOXY (121°C cure). AF-32 and ISD112 film adhesives supplied by 3M were used as damping layers. AF-32 is a toughened structural adhesive and ISD112 is commonly present in 3M's SCOTCHDAMP vibration damping tapes. The tubes were made by hand layup techniques. Alternating overlaps of 10 mm were used where two segments joined together as illustrated by FIG. 5. The damped tubes were prepared for curing by first rolling them between two padded plates to increase compaction. Further compaction was achieved by roll-wrapping with CELLOPHANE tape under high tension. The tubes were then cured in an oven at 121°C while hanging vertically. Four specimens were constructed with 371 mm lengths, 25.4 mm inner diameters and two sets of 5 ply stiffness layers. The differences between the tubes was:

| SPECIMEN | WINDING ANGLE |
|----------|---------------|
| A. | ALL 0 |
| B. | +10 /-10 |
| C. | +10 /-10 with .254 mm damping layer of AF-32 |

(continued)

| SPECIMEN | WINDING ANGLE |
|---|---|
| D. | +16 /-16 with .254 mm damping layer of ISD112 |

Each tube was suspended from rubber bands to simulate free-free boundary conditions. An Endevco Model 2250-A accelerometer was attached to one end of the tube by beeswax. The opposite end of the tube was struck by a PCB Piezotronics, Inc Model 086B01 impulse hammer to induce longitudinal vibrations. An HP 35660A dynamic signal analyzer calculated the frequency response function G(jw) of the tube (acceleration over force) by averaging the results from 25 impacts. The loss factor was calculated from the expression:

$$\eta = \frac{\Delta f}{f_r}$$

where $\Delta f$ is the frequency span between the maximum and minimum points in the real part of the frequency response function near the resonant frequency, $f_r$. The mass of the damped tube C. was only 2.2 percent greater than the mass of the undamped tubes, but was characterized by an increased loss factor compared to both base line tubes, A and B. The loss factor of specimen D was 4.42 percent. Its mass was 80.644 grams compared to 79.234 grams for base tubes A and B.

**EXAMPLE II**

Parametric studies were conducted using a FORTRAN computer code by varying: the ply orientation angle $\phi$ from 0° to 20°; the number of segments in the tube from N=1 to 8; the damping layer material, either AF-32 or ISD112; and either constrained or unconstrained ends. The tubes were identical to the manufactured tubes of EXAMPLE I, except that they were 356 mm in length.

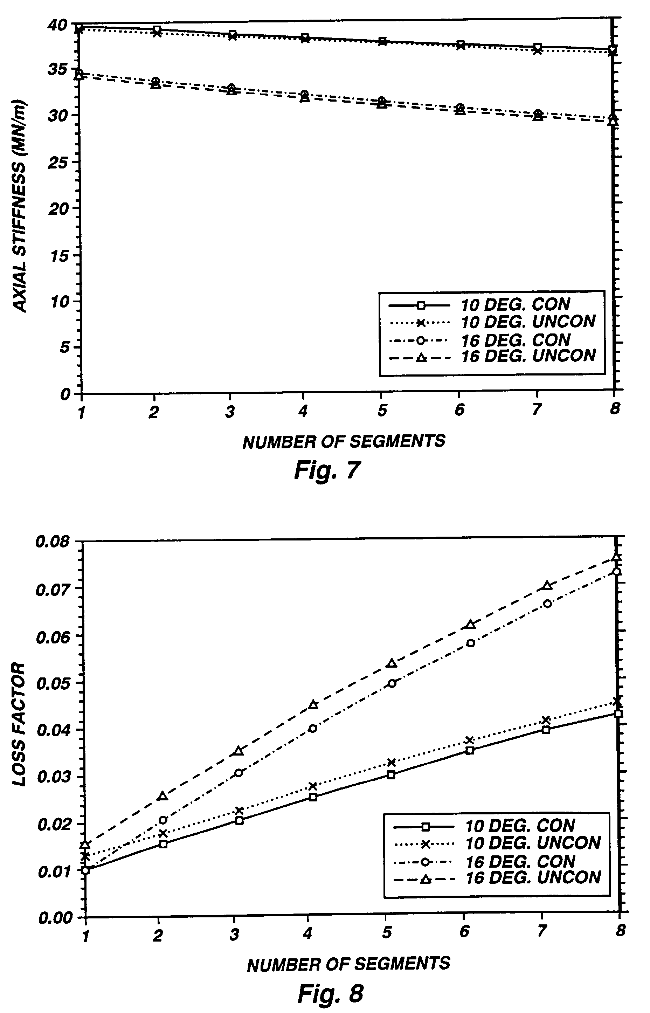

The results of the parametric studies are shown by FIGS. 7-10. FIG. 7 plots the change in axial stiffness as the number of segments in the tube increases. Four subcases exist with wind angles of 10° and 16° and constrained and unconstrained rotational displacements, CON and UNCON, respectively. FIG. 8 plots the change in loss factor as a function of the number of segments.

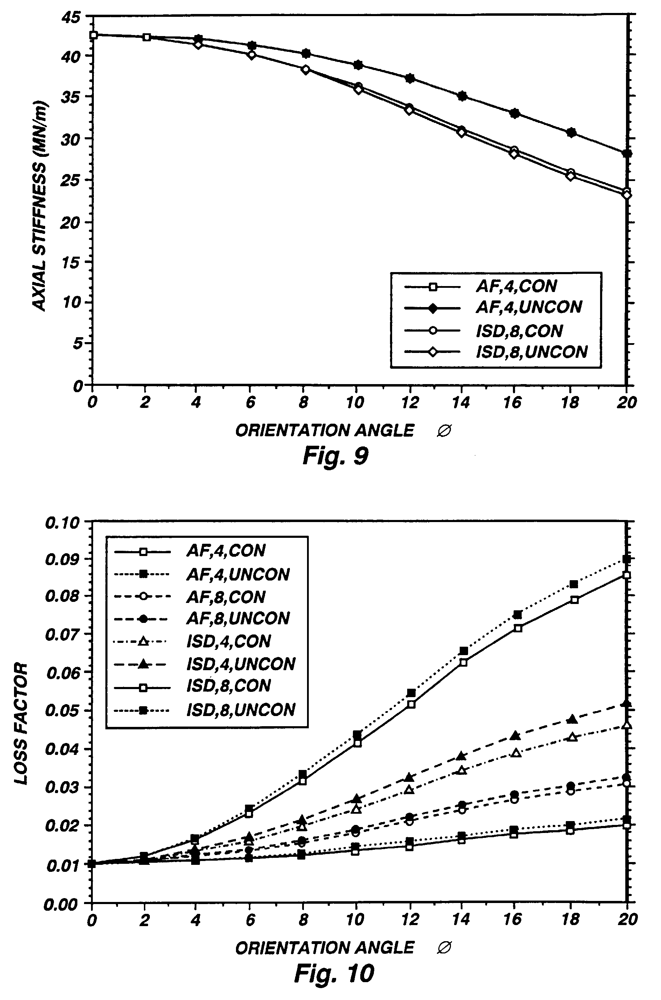

FIG. 9 plots the loss in axial stiffness as the wind angle $\phi$ increases. The four subcases include the constrained and unconstrained end conditions for both a four segment, AF-32 specimen and an eight segment ISD212 specimen. These specimens show the effect of end constraints and represent the minimum and maximum stiffness changes encountered in the parametric study.

The change in damping loss factor as a function of increased wind angle is plotted in FIG. 10. Eight subcases are contained on the graph, including combinations of: constrained and unconstrained end conditions; four and eight segments; and AF-32 and ISD112 damping materials.

Other testing and computer modeling indicated that for the specimen geometry selected, an optimum tube would contain 6 segments, a 14 degree wind angle and would select ISD112 as the damping layer.

The strength and integrity of the joints between segments is enhanced by overlapping layers as shown by FIG. 5. Damping layer 71 is sandwiched between multiple plies 72-75 of a first stiffness layer and multiple plies 77-80 of a second stiffness layer. Each of the plies has a fist part A and a second part B. The A portions of the plies 72-76 of the first layer have a positive orientation angle while the B portions of those plies have negative orientation angles. The reverse relationship exists with respect to the A and B portions of the plies 77-80. The boundary 81 between ply 75A and 75B is offset from the boundary 82 between ply 74A and 74B. This pattern continues from ply to ply throughout the entire structure with the boundaries between portions of adjacent plies being always out of registration.

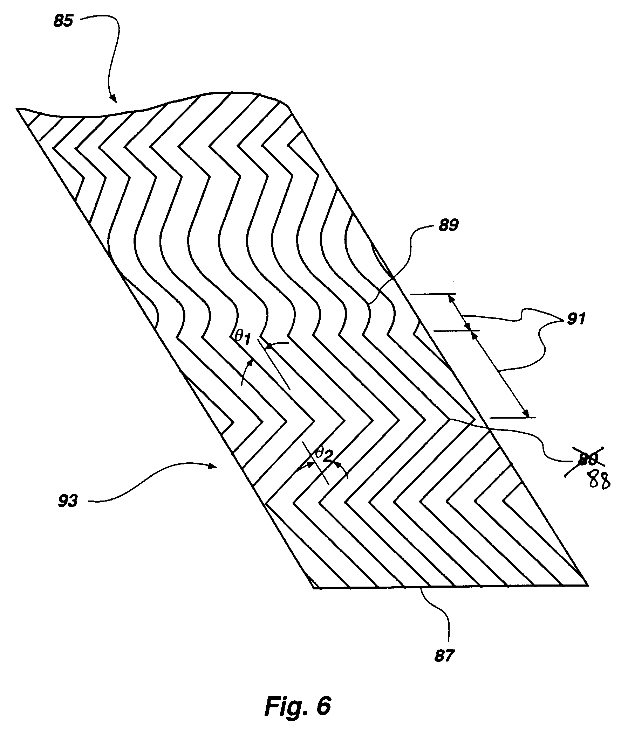

A fiber reinforced composite material 85 in the form of a pre-impregnated tape with segments of reinforcing fibers disposed in segments at alternating orientation angles is illustrated by FIG. 6. The fibers 87 may be configured with sharp angular changes in orientation 88 or with more gentle changes in direction 89. The lengths of adjacent segments 91 may vary randomly or in a preselected pattern. The tape support backing 93 may be of any appropriate material, including cloth, paper or plastic sheet material. The orientation angle may vary randomly, according to a pattern, continuously or in steps to suit the requirements of the designer. Ideally, continuous fibers are preimpregnated with a resin to be cured after layup in a desired configuration. The illustrated tape differs from available "prepreg" materials in that it is useful for the direct layup of dampened structures consistent with the teachings of this disclosure. That is, shear couple induced displacements within the tape can be used to exercise viscoelastic materials to create an effective damping mechanism. The average modulus along the primary direction of the tape is nearly as high as that of a conventional prepreg tape in which all of the fibers are oriented at zero degrees. The average modulus perpendicular to the primary direction of the tape is much higher than that of such a conventional tape, however.

Reference herein to details of the illustrated and preferred embodiments is not intended to limit the scope of the appended claims which are intended to define the invention.

## Claims

1. A composite structure comprising:

   at least two stiffness layers, each said stiffness layer being formed of multiple segments, each said segment abutting against an adjacently positioned segment to define a boundary, each said stiffness layer including reinforcing fibers impregnated with resin, wherein the orientation of said reinforcing fibers in adjacently positioned segments define alternating positive and negative orientation angles with respect to a longitudinal axis of the composite structure; and
   a damping layer positioned between said at least two stiffness layers, said damping layer being adhered to said at least two stiffness layers;
   wherein the orientation of the reinforcing fibers in adjacent said segments is such that stresses are concentrated at a boundary between adjacent said segments in response to loads applied along said stiffness layer transversely to said boundary.

2. The composite structure according to Claim 1, wherein said structure includes a first said stiffness layer, a second said stiffness layer and an intermediate damping layer of viscoelastic material.

3. The composite structure according to Claim 2, wherein each of said first and second stiffness layers has a corresponding number of segments structured and arranged to position the boundaries between adjacent segments of said first stiffness layer approximately opposite, with respect to said damping layer, the corresponding boundaries between adjacent segments of said second stiffness layer.

4. A composite structure comprising a stiffness layer comprised of impregnated reinforcing fibers, and a damping layer, adhered to said stiffness layer, said stiffness layer being provided in a plurality of segments, the reinforcing fibers in adjacent said segments being dissimilarly oriented such that stresses are concentrated at a boundary between adjacent said segments in response to loads applied along said stiffness layer transversely to said boundary.

5. A composite structure according to Claim 4, wherein said reinforcing fibers are impregnated at least partially with a viscoelastic material.

6. A composite structure according to Claim 5 including a first said stiffness layer, a second said stiffness layer and an intermediate damping layer of viscoelastic material.

7. A composite structure according to Claim 6, wherein each of said first and second stiffness layers has a corresponding number of segments structured and arranged to position the boundaries between adjacent segments of said first stiffness layer approximately opposite, with respect to said damping layer, the corresponding boundaries between adjacent segments of said second stiffness layer.

8. A composite structure comprising a damping layer and a stiffness layer, said stiffness layer being comprised of reinforcing fibers impregnated with resin, said damping layer being adhered to said stiffness layer, said stiffness layer being formed in a plurality of segments, the reinforcing fibers in adjacent said segments being dissimilarly oriented such that stresses are concentrated at a boundary between adjacent said segments in response to loads applied along said stiffness layer transversely to said boundary.

9. A composite structure according to Claim 8, wherein said structure includes a first said stiffness layer, a second said stiffness layer and an intermediate damping layer of viscoelastic material.

10. A composite structure according to Claim 8, wherein said stiffness layer includes sufficient viscoelastic material to contribute damping properties to said stiffness layer.

11. A composite structure according to Claim 10, wherein said structure includes a first said stiffness layer, a second said stiffness layer and an intermediate damping layer of viscoelastic material.

12. A composite structure according to Claim 8 configured as a hollow tube, said stiffness layer comprising the wall of said tube.

13. A composite structure according to Claim 12, wherein said wall comprises a plurality of said stiffness layers arranged concentrically with the annulus defined by adjacent said stiffness layers being filled with a damping layer.

14. A composite structure comprising a damping layer and a stiffness layer, said damping layer being adhered to said stiffness layer, said stiffness layer being comprised of a plurality of segments, each segment including an arrangement of respective reinforcing fibers, each segment being positioned adjacent to another said segment along a longitudinal axis of said stiffness layer, wherein said reinforcing fibers in each segment are oriented dissimilarly to said reinforcing fibers of an adjacent segment.

15. The composite structure of Claim 14 wherein each said segment is positioned co-planar with each said segment positioned adjacent thereto.

16. The composite structure according to claims 1, 4, 8 or 14 wherein said reinforcing fibers extend continuously through at least two adjacently positioned segments.

**Patentansprüche**

1. Verbundstruktur umfassend:

mindestens zwei Versteifungsschichten, wobei jede Versteifungsschicht aus mehreren Segmenten gebildet wird, wobei jedes Segment an ein benachbart angeordnetes Segment stößt, wobei eine Grenze definiert wird, wobei jede Versteifungsschicht Verstärkungsfasern, die mit Harz Imprägniert sind, enthält, wobei die Orientierung dieser verstärkenden Fasern in benachbart angeordneten Segmenten alternierend positive und negative Orientierungswinkel in Bezug auf eine Längsachse der Verbundstruktur definiert, und
eine Dämpfungsschicht, die zwischen mindestens zwei Versteifungsschichten angeordnet ist, wobei die Dämpfungsschicht an den mindestens zwei Versteifungsschichten anhaftet; wobei die Orientierung der Verstärkungsfasern in benachbarten Segmenten so ist, daß Spannungen an einer Grenze zwischen benachbarten Segmenten gebündelt werden als Reaktion auf Belastungen, die entlang der Versteifungsschicht, quer zu der Grenze, aufgegeben werden.

2. Verbundstruktur nach Anspruch 1, worin die Struktur eine erste Versteifungsschicht, eine zweite Versteifungsschicht und eine dazwischenliegende Dämpfungsschicht aus viskoelastischem Material einschließt.

3. Verbundstruktur nach Anspruch 2, worin jede der ersten und zweiten Versteifungsschichten eine entsprechende Anzahl von Segmenten aufweist, die so strukturiert und angeordnet sind, daß die Grenzen zwischen benachbarten Segmenten der ersten Versteifungsschicht im wesentlichen im Hinblick auf die Dämpfungsschicht, den entsprechenden Grenzen zwischen benachbarten Segmenten der zweiten Versteifungsschicht gegenüberliegend angeordnet sind.

4. Verbundstruktur umfassend eine Versteifungsschicht aus imprägnierten Verstärkungsfasern und eine Dämpfungsschicht, die an der Versteifungsschicht haftet, wobei die Versteifungsschicht mit einer Mehrzahl von Segmenten versehen ist, wobei die Verstärkungsfasern in benachbarten Segmenten ungleich orientiert sind, so daß Spannungen an einer Grenze zwischen benachbarten Segmenten als Reaktion auf Belastungen, die entlang der Versteifungsschichten, quer zu der Grenze, aufgegeben werden, konzentriert werden.

5. Verbundstruktur nach Anspruch 4, wobei die Verstärkungsfasern zumindest teilweise mit einem viskoelastischen Material imprägniert sind.

6. Verbundstruktur nach Anspruch 5, die eine erste Versteifungsschicht, eine zweite Versteifungsschicht und eine dazwischenliegende Dämpfungsschicht aus viskoelastischem Material einschließt.

7. Verbundstruktur nach Anspruch 6, worin die erste und zweite Versteifungsschicht eine entsprechende Anzahl von Segmenten aufweisen, die so strukturiert und angeordnet sind, daß die Grenzen zwischen benachbarten Segmenten der ersten Versteifungsschicht ungefähr, im Hinblick auf die Dämpfungsschicht, den entsprechenden Grenzen zwischen benachbarten Segmenten der zweiten Versteifungsschicht gegenüberliegen.

8. Verbundstruktur umfassend eine Dämpfungsschicht und eine Versteifungsschicht, wobei die Versteifungsschicht aus Verstärkungsfasern aufgebaut ist, die mit Harz imprägniert sind, wobei die Dämpfungsschicht an der Versteifungsschicht haftet, wobei die Versteifungsschicht aus einer Mehrzahl von Segmenten gebildet wird, wobei die Verstärkungsfasern in benachbarten Segmenten ungleich orientiert sind, so daß Spannungen an einer Grenze zwischen benachbarten Segmenten als Reaktion auf Belastungen, die entlang der Versteifungsschicht, quer zu der Grenze, aufgegeben werden, konzentriert werden.

9. Verbundstruktur nach Anspruch 8, worin die Struktur eine erste Versteifungsschicht, eine zweite Versteifungsschicht und eine dazwischenliegende Dämpfungsschicht aus viskoelastischem Material einschließt.

10. Verbundstruktur nach Anspruch 8, worin die Versteifungsschicht ausreichend viskoelastisches Material enthält, um der Versteifungsschicht dämpfende Eigenschaften zu verleihen.

11. Verbundstruktur nach Anspruch 10, wobei die Struktur eine erste Versteifungsschicht, eine zweite Versteifungsschicht und eine dazwischenliegende Dämpfungsschicht aus viskoelastischem Material einschließt.

12. Verbundstruktur nach Anspruch 8, die als Hohlrohr ausgebildet ist, wobei die Versteifungsschicht die Wand des Rohres umfaßt.

13. Verbundstruktur nach Anspruch 12, worin die Wand eine Mehrzahl von Versteifungsschichten umfaßt, die konzentrisch angeordnet sind, wobei die ringförmige Öffnung durch benachbarte Versteifungsschichten, die mit einer Dämpfungsschicht gefüllt sind, definiert wird.

14. Verbundstruktur umfassend eine Dämpfungsschicht und eine Versteifungsschicht, wobei die Dämpfungsschicht an der Versteifungsschicht haftet, wobei die Versteifungsschicht aus einer Mehrzahl von Segmenten aufgebaut ist, wobei jedes Segment eine Anordnung von Verstärkungsfasern einschließt, jedes Segment benachbart zu einem anderen Segment entlang einer Längsachse der Versteifungsschicht angeordnet ist, wobei die Verstärkungsfasern in jedem Segment ungleich wie die Verstärkungsfasern des benachbarten Segmentes orientiert sind.

15. Verbundstruktur nach Anspruch 14, worin jedes Segment koplanar mit jedern Segment, das benachbart dazu angeordnet ist, angeordnet ist.

16. Verbundstruktur nach einem der Ansprüche 1, 4, 8 oder 14, worin die verstärkenden Fasern sich kontinuierlich über mindestens zwei benachbart angeordnete Segmente erstrecken.

**Revendications**

1. Structure composite comportant :

au moins deux couches de rigidité, chacune desdites couches de rigidité étant constituée de multiples segments, chaque segment venant on butée contre un segment positionné de manière adjacente pour définir une frontière, chaque couche de rigidité incluant des fibres de renforcement imprégnées de résine, l'orientation desdites fibres de renforcement dans des segments positionnés de manière adjacente définissant des angles d'orientation positive et négative alternants par rapport à un axe longitudinal de la structure composite, et
une couche d'amortissement positionnée entre lesdites au moins deux couches de rigidité, ladite couche d'amortissement étant collée auxdites au moins deux couches de rigidité,
dans laquelle l'orientation des fibres de renforcement dans lesdits segments adjacents étant telle que des contraintes sont concentrées au niveau d'une frontière entre lesdits segments adjacents en réponse à des charges appliquées le long de ladite couche de rigidité transversalement à ladite frontière.

2. Structure composite selon la revendication 1, dans laquelle ladite structure comporte une première couche de rigidité, une seconde couche de rigidité et une couche d'amortissement intermédiaire constituée d'un matériau viscoélastique.

3. Structure composite selon la revendication 2, dans laquelle chacune desdites première et seconde couches de rigidité a un nombre correspondant de segments structurés et agencés pour positionner les frontières entre des segments adjacents de ladite première couche de rigidité approximativement en vis-à-vis, par rapport à ladite couche d'amortissement, des frontières correspondantes entre des segments adjacents de ladite seconde couche de rigidité.

**4.** Structure composite comportant une couche de rigidité constituée de fibres de renforcement imprégnées, et une couche d'amortissement, collée à ladite couche de rigidité, ladite couche de rigidité étant munie d'une pluralité de segments, les fibres de renforcement dans lesdits segments adjacents étant orientées de manière différente de sorte que des contraintes sont concentrées au niveau d'une frontière entre lesdits segments adjacents en réponse à des charges appliquées le long de ladite couche de rigidité transversalement à ladite frontière.

**5.** Structure composite selon la revendication 4, dans laquelle lesdites fibres de renforcement sont imprégnées au moins partiellement d'un matériau viscoélastique.

**6.** Structure composite selon la revendication 5, incluant une première couche de rigidité, une seconde couche de rigidité et une couche d'amortissement intermédiaire constituée d'un matériau viscoélastique.

**7.** Structure composite selon la revendication 6, dans laquelle chacune desdites première et seconde couches de rigidité a un nombre correspondant de segments structurés et agencés pour positionner les frontières entre des segments adjacents de ladite première couche de rigidité approximativement en vis-à-vis, par rapport à ladite couche d'amortissement, des frontières correspondantes entre des segments adjacents de ladite seconde couche de rigidité.

**8.** Structure composite comportant une couche d'amortissement et une couche de rigidité, ladite couche de rigidité étant constituée de fibres de renforcement imprégnées de résine, ladite couche d'amortissement étant collée à ladite couche de rigidité,
ladite couche de rigidité étant constituée d'une pluralité de segments, les fibres de renforcement dans lesdits segments adjacents étant orientées de manière différente de sorte que des contraintes sont concentrées au niveau d'une frontière entre lesdits segments adjacents en réponse à des charges appliquées le long de ladite couche de rigidité transversalement à ladite frontière.

**9.** Structure composite selon la revendication 8, dans laquelle ladite structure inclut une première couche de rigidité, une seconde couche de rigidité et une couche d'amortissement intermédiaire constituée d'un matériau viscoélastique.

**10.** Structure composite selon la revendication 8, dans laquelle ladite couche de rigidité comporte un matériau viscoélastique suffisant pour attribuer des propriétés d'amortissement à ladite couche de rigidité.

**11.** Structure composite selon la revendication 10, dans laquelle ladite structure comporte une première couche de rigidité, une seconde couche de rigidité, et une couche d'amortissement intermédiaire constituée d'un matériau viscoélastique.

**12.** Structure composite selon la revendication 8, configurée sous forme d'un tube creux, ladite couche de rigidité constituant la paroi dudit tube.

**13.** Structure composite selon la revendication 12, dans laquelle ladite paroi comporte une pluralité desdites couches de rigidité agencées de manière concentrique, la partie annulaire définie par lesdites couches de rigidité adjacentes étant remplie d'une couche d'amortissement.

**14.** Structure composite comportant une couche d'amortissement et une couche de rigidité, ladite couche d'amortissement étant collée à ladite couche de rigidité, ladite couche de rigidité étant constituée d'une pluralité de segments, chaque segment incluant un agencement de fibres de renforcement respectives, chaque segment étant positionné adjacent à un autre segment le long d'un axe longitudinal de ladite couche de rigidité, dans laquelle lesdites fibres de renforcement de chaque segment sont orientées de manière différente par rapport auxdites fibres de renforcement d'un segment adjacent.

**15.** Structure composite selon la revendication 14, dans laquelle chaque segment est positionné dans le même plan que chaque segment positionné adjacent à celui-ci.

**16.** Structure composite selon les revendications 1, 4, 8 ou 14, dans laquelle lesdites fibres de renforcement s'étendent de façon continue à travers au moins deux segments positionnés de manière adjacente.

L

110

17

23A

11C

19B

21B

11B

19B

11A

11

19C

17

23A

13D

21A

13C

13B

13

27

13A

19C

15

19A

L

**Fig. 1**

Fig. 2

57    51

55A

55B

53    53

**Fig. 3**

**Fig. 4**

**Fig. 5**

Fig. 6

Fig. 7

Fig. 8

**Fig. 9**

**Fig. 10**